**Europäisches Patentamt**

**European Patent Office**

**Office européen des brevets**

(19)

(11) Veröffentlichungsnummer: **0 437 663 A1**

## (12) EUROPÄISCHE PATENTANMELDUNG

(21) Anmeldenummer: 90101088.4

(22) Anmeldetag: 19.01.90

(51) Int. Cl.5: **F16H 37/04, F16H 3/54**

(43) Veröffentlichungstag der Anmeldung:
24.07.91 Patentblatt 91/30

(84) Benannte Vertragsstaaten:
**CH DE FR GB IT LI**

(71) Anmelder: **ZAPOROZHSKY AVTOMOBILNY ZAVOD 'KOMMUNAR' (PROIZVODSTVENNOE OBIEDINENIE 'AVTOZAZ')**
**pr. Lenina 8**
**Zaporozhie, 330600(SU)**

(72) Erfinder: **Steshenko, Vladimir Petrovich**
**Ulitsa Geroev Stalingrada, 31, kv. 97**
**Zaporozhie(SU)**
Erfinder: **Baranov, Alexandr Andreevich**
**Ulitsa Pravdy 47, kv. 11**
**Zaporozhie(SU)**
Erfinder: **Fimichev, Stanislav Alexandrovich**
**Prospekt B. Khmelnitskogo, 63, kv. 14**
**Melitopol(SU)**
Erfinder: **Zagorko, Anatoly Georgievich**
**Ulitsa Lenina, 143, kv. 23**
**Melitopol(SU)**
Erfinder: **Chimeris, Leonid Evgenievich**
**Selo Dachnoe, Ulitsa Koshevogo, 29**
**Volynskaya oblast, Kivertsovsky raion(SU)**
Erfinder: **Gvozdik, Bogdan Stepanovich**
**Ulitsa Kozakova, 1, kv. 54**
**Volynskaya oblast, Lutsk(SU)**

(74) Vertreter: **Patentanwälte Beetz sen. - Beetz jun. Timpe - Siegfried - Schmitt-Fumian-Mayr**
**Steinsdorfstrasse 10**
**W-8000 München 22(DE)**

(54) **Schaltgetriebe für Fahrzeuge.**

(57) Gegenstand der Erfindung ist ein insbesondere für Automobile mit vergrößerter Gangzahl und erweitertem Bereich der Übersetzungszahlen bestimmtes Stufen- bzw. Schaltgetriebe, das ein Achsgetriebe (1), ein Zweiwellen-Hauptgetriebe (2) mit einer Hauptwelle (21) und einer Kupplungswelle (9) sowie ein Planetengetriebe (3) als Zusatzgetriebe aufweist.

Das Wesen der Erfindung besteht darin, daß das Zentralrad (6) des Umlaufwerkes (3) auf der mit der Kupplung (5) verbundenen Eingangswelle (4) oder auf der Hauptwelle (24b) des Hauptgetriebes (2b) starr befestigt ist und der Steg (7) auf der Kupplungswelle (9) des Hauptgetriebes (2) oder auf der mit dem Achsgetriebe (1) verbundenen Ausgangswelle (8b) des Umlaufwerkes (3c) starr befestigt ist. Dabei weist das Umlaufwerk (3) eine Vorrichtung zum Wechseleingriff des Kronrades (12) mit dem Gehäuse (16) oder mit dem Steg (7) auf.

Xerox Copy Centre

FIG. 1

## SCHALTGETRIEBE FÜR FAHRZEUGE

Die Erfindung betrifft ein Stufen- bzw. Schaltgetriebe für Fahrzeuge, insbesondere für Automobile mit großer Anzahl an Schaltstufen und einem weiten Bereich der Übersetzungsverhältnisse.

Eines der Hauptprobleme bei derartigen Schaltgetrieben bzw. Transmissionen besteht darin, einen erforderlichen Bereich der Übersetzungsverhältnisse bei vorgegebener Gangzahl sicherzustellen, die Außenabmessungen zu verringern und den Wirkungsgrad in jedem Gang zu erhöhen. Der Wirkungsgrad hängt von den Gesamtverlusten ab, die sich aus den Verlusten in Lagern und Verzahnungen sowie aus den Schmierverlusten zusammensetzen. Diese Verluste verteilen sich in prozentualem Verhältnis ungefähr gleich, d.h. der Wert jedes der Bestandteile ist wesentlich.

Aus der US-A-4 261 217 ist eine Transmission bekannt, bei der ein Zusatzgetriebe aus zwei ständig kämmenden Zahnradpaaren besteht. Die Eingangswelle mit der Schaltkupplung und den getriebenen Rädern fluchtet mit der Kupplungswelle, und der Block der getriebenen Räder ist auf der Verlängerung der Hauptwelle des Hauptgetriebes frei aufgesetzt. Die Eingangswelle des Zusatzgetriebes ist mit der Kupplung verbunden, während die Hauptwelle des Hauptgetriebes mit dem Achsgetriebe verbunden ist. Diese Transmission gestattet die Verdoppelung der Gangzahl des Hauptgetriebes, hat aber folgende Nachteile.

Beim Einschalten des Zusatzgetriebes vermindert sich der Wirkungsgrad der Transmission, denn das Drehmoment wird über zwei zusätzliche Verzahnungspaare übertragen.

Die Axialabmessung der Transmission vergrößert sich, weil die Räder und die als Schaltkupplung ausgebildete Schalteinrichtung des Zusatzgetriebes in bezug auf das Hauptgetriebe hintereinander angeordnet sind.

Ein Teil dieser Mängel wird beim Schaltgetriebe gemäß US-A-4 386 650 vermieden, die ein Achsgetriebe, ein Zweiwellen-Hauptgetriebe und ein als Umlaufwerk ausgebildetes Zusatzgetriebe enthält. Die Eingangswelle des Umlaufwerkes verbindet die Kupplung mit dem Steg, und die Ausgangswelle verbindet des Kronrad mit der Kupplungswelle des Hauptgetriebes. Dabei ist das Mittenrad mittels einer als Reibkupplung ausgebildeten Schalteinrichtung entweder mit dem Kronrad oder mit dem Getriebegehäuse verbunden.

Diese Transmission arbeitet bald mit dem verriegelten Umlaufwerk, d.h. mit der Übersetzungszahl gleich eins, bald mit der eingeschalteten Übersetzung ins schnelle unter Verdoppelung der Gangzahl des Hauptgetriebes.

Der gesamte Bereich der Übersetzungszahlen erweitert sich jedoch geringfügig, praktisch um 25 bis 30%, weil das Umlaufwerk die Funktion eines Gruppengetriebes erfüllt. Da die Transmission unter abwechselnder Einschaltung des Umlaufwerkes arbeitet, so drehen sich die Räder des Umlaufwerkes ungefähr die Hälfte seiner Arbeitszeit unter Übertragung des Drehmomentes, was die Verminderung des Wirkungsgrades der Transmission in dieser Zeit bedingt.

Die betreffende Transmission ist gegenüber der vorangegangenen Transmission in bezug auf die Axialabmessung kompakter gebaut, und dies liegt daran, dass die Räder des Umlaufwerkes in einer Reihe angeordnet sind.

Zugleich aber führen die nachfolgende Anordnung der als Reibkupplung ausgebildeten Schalteinrichtung und die Befestigung des Kronrades an der Kupplungswelle über einen Verbindungsflasch mit Hilfe von dem Lager nachgeordneten Schlitzen zur Vergrösserung der axialen Abmessung der Transmission, was besonders für Frontantriebswagen unerwünscht ist.

Die eventuelle Anordnung der Schlitzverbindung innerhalb des Lagers wird eine Vergrösserung des Aussendurchmessers des Lagers selbst nach sich ziehen und als Folge davon zur Vergrösserung des Achsabstandes zwischen den Weilen des Hauptgetriebes führen, weswegen ihre Masse zwangsläufig grösser wird.

Der Erfindung liegt die Aufgabe zugrunde, ein gattungsgemäßes Stufen- bzw. Schaltgetriebe mit einer besonderen kinematischen Bindung zwischen dem Hauptgetriebe und dem Zusatzgetriebe zu schaffen, bei dem der Bereich der Übersetzungszahlen unter gleichzeitiger Erhöhung des Wirkungsgrades und Verringerung der Abmessungen erweitert werden kann.

Die gestellte Aufgabe wird bei einer Transmission, die ein Achsgetriebe, ein Zweiwellen-Hauptgetriebe, in dessen Gehäuse eine Kupplungswelle und eine Hauptwelle drehbar gelagert sind, und ein in Form eines Umlaufwerkes mit Eingangswelle und Ausgangswelle ausgeführtes Zusatzgetriebe in kinematischer Bindung enthält, erfindungsgemäß dadurch gelöst, daß im Umlaufwerk das Mittenrad auf der mit der Kupplung verbundenen Eingangswelle starr befestigt ist und der Steg an der Kupplungswelle des Hauptgetriebes starr befestigt ist, wobei das Umlaufwerk eine Vorrichtung zum Wechseleingriff des Kronrades mit dem Gehäuse oder mit dem Steg besitzt.

Die Ausführung der genannten kinematischen Bindungen zwischen dem Hauptgetriebe und dem Zutsatzgetriebe verdoppelt nicht nur die Gangzahl des Hauptgetriebes, sondern erweitert auch den Bereich der Übersetzungszahlen der Transmission aufgrund dessen, dass das Umlaufwerk ein Untersetzungsgetriebe ist.

Seine Übersetzungszahl ergibt sich aus der Beziehung:

$$i = \frac{Z_I + Z_2}{Z_I}$$

wo i die Übersetzungszahl,
$Z_I$ und $Z_2$ die Zähnezahl des Mitten - bzw. des Kronrades bedeuten.

Theoretisch liegen die Übersetzungszahlen des genannten Umlaufwerkes in einem Bereich von zwei bis zur Unendlichkeit. Deshalb kann der Bereich der Übersetzungszahlen der Transmission mindestens verdoppelt werden. In der Praxis gestattet es die Möglichkeit der Auswahl einer erforderlich grossen Übersetzungszahl des Zusatzgetriebes, die ganze Reihe der Übersetzungszahlender Transmission mit einem einzigen konstanten Nenner, beispielsweise in einer geometrischen Progression auszuführen.

Ausserdem gestattet es die oben erwähnte Möglichkeit, den Bereich der Übersetzungszahlen des Hauptgetriebes zu verringern, weshalb seine Übersetzungszahlen einander angenähert werden und somit der Unterschied der Winkelgeschwindigkeiten und die Trägheitsmomente der zu synchronisierenden Elemente des Getriebes beim Umschalten von Gang zu Gang vermindert werden können.

Die gesamte Reihe der Übersetzungszahlen der Transmission vom niedrigsten bis zum höchsten Gang bildet sich folgenderweise: die erste Reihe der Gänge (nach der Gangzahl im Hauptgetriebe) liegt bei dem eingeschalteten Umlaufwerk unter Realisierung seiner Übersetzungszahl vor und dann die zweite Reihe bei dem verriegelten Umlaufwerk, wenn seine Elemente, d.h. das Mittenrad, der Steg, das Kronrad, sich mit ein und derselben Winkelgeschwindigkeit, d.h. mit der Übersetzungszahl gleich eins, drehen.

Beim Betrieb arbeitet das Fahrzeug die meiste Zeit auf der zweiten Reihe der Gänge, während die erste Reihe nur bei Beschleunigungsfahrweisen, die höchstens ein Drittel der gesamten Fahrzeit einnehmen, benutzt wird. Im Zusammenhang damit, dass auf der zweiten Reihe der Gänge das Umlaufwerk abgeschaltet ist, gehen die Verluste in der Transmission während des grössten Teils der Arbeitszeit zurück, während ihr Wirkungsgrad steigt.

In der Transmission gemäss der Erfindung ist es vorteilhaft, den Steg des Umlaufwerkes am Ende der Kupplungswelle des Hauptgetriebes auf der Seite der Kupplung zu befestigen, oder mit anderen Worten, das Umlaufwerk zwischen der Kupplung und dem Hauptgetriebe anzuordnen.

Dabei bleibt die Konstruktion erhalten, und die meisten Teile des Hauptgetriebes können mit den Teilen des Hauptgetriebes, die in anderen Fahrzeugen zum Einsatz kommen, vereinheitlicht werden, ohne dass ein Zusatzgetriebe verwendet werden muss.

ES ist zweckmässig, die Kupplungswelle des Huptgetriebes hohl auszubilden und durch diese die Eingangswelle des Umlaufwerkes hindurchzuführen, den Steg dabei am Ende der Kupplungswelle auf der zur Kupplung entgegengesetzten Seite anzubringen oder, mit anderen Worten, das Umlaufwerk gegenüber dem Hauptgetriebe fliegend anzuordnen.

Eine derartige Ausführung vermindert die Drehsteifigkeit der Eingangswelle und erniedrigt somit die dynamischen Belastungen in der Transmission.

Das Umlaufwerk der Transmission kann zweckmässigerweise mit einer mittels einer Einrückkupplung mit dem Steg des Umlaufwerkes verbundenen zusätzlichen Ausgangswelle zur äusseren Leistungsentnahme versehen werden.

Mit einer solchen Ausführung liegt ein Antrieb für zusätzliche Mechanismen vor, der sowohl beim Fahren als auch beim Halten des Fahrzeuges wirkt, weil die Eingangswelle des Umlaufwerkes das Drehmoment direkt von der Kupplung unabhängig davon überträgt, ob das Hauptgetriebe ein- oder ausgeschaltet ist. Zwei Betriebszustände des Antriebs der äusseren Leistungsentnahme werden von der Vorrichtung zum Wechseleingriff des Kronrades sichergestellt, und zwar bei dem Eingriff des letzterenmit dem Gehäuse wird der erste Betriebszustand und bei dem Eingriff mit dem Steg der zweite Betriebszustand verwirklicht.

Für die Transmission mit einer hohlen Kupplungswelle des Hauptgetriebes, durch die die Eingangswelle des Umlaufwerkes durchgeht, wobei der Steg am Ende der Kupplungswelle auf der zur Kupplung entgegengesetzten Seite angebracht ist, kann der Steg vorteilhafterweise in Form eines mit der Kupplungswelle einstückig ausgebildeten Flansches ausgeführt werden, an dem die Achsen der Umlaufräder angebracht sind.

Eine solche Ausführung hat den Vorteil der verminderten axialen Abmessung der Transmission und der Senkung des Arbeitsaufwandes zu deren Fertigung, denn eine Schlitzverbindung zwischen der Kupplungswelle und dem Steg erübrigt sich.

Bei dem Steg in Form eines mit der hohlen Kupplungswelle einstückig ausgebildeten Flansches kann der Teil der Kupplungswelle, der sich von dem auf der Kupplungswelle flanschseitig sitzenden Lager in Richtung zur Kupplung erstreckt, zweckmässigerweise einen maximalen Aussendurchmesser, der kleiner als der Innendurchmesser des erwähnten Lagers ist, haben und einen Abschnitt aufweisen, auf dem Längszähne zum Eingriff mit dem Zwischenrad des Rückwärtsganges und zur Verbindung mit den auf der Kupplungswelle angebrachten, mit Innenzähnen versehenen Rädern angeordnet werden sollen.

Eine solche Ausführung der Transmission gewährleistet minimale Achsabstände des Haupt- und des Zusatzgetriebes dadurch, dass die separate Schlitzverbindung der Kupplungswelle mit den darauf angebrachten Rädern und somit zusätzliche "Stufen" fehlen, die zur Vergrösserung des Aussendurchmessers der Kupplungswelle und folglich zur Vergrösserung des Aussendurchmessers des am Flansch des Steges angeordneten Lagers sowie des Achsabstandes zwischen der Kupplungswelle und der Hauptwelle führen.

Rationell erscheint es gemäss der Erfindung, die als Vorrichtung zum Wechseleingriff des Kronrades mit dem Gehäuse oder mit dem Steg ausgebildete Schalteinrichtung des Umlaufwerkes in Form einer ringförmigen Kupplung mit Innenzähnen auszuführen, die mittels eines Antriebes axial verschiebbar ist, und dabei das Kronrad mit Aussenzähnen zum Dauereingriff mit den Innenzähnen der ringförmigen Kupplung zu versehen und den Steg und das Gehäuse mit Kränzen mit Aussenzähnen allerdings zum Wechseleingriff mit den Innenzähnen der ringförmigen Kupplung zu versehen.

Eine solche Ausführung der Vorrichtung zum Wechseleingriff des Kronrades mit dem Gehäuse oder mit dem Steg vermindert die Axialabmessung der Transmission, weil die Axialabmessungen der ringförmigen Kupplung und des Kronrades auf der Breite des letzteren zusammenfallen.

Der Antrieb der Vorrichtung zum Wechseleingriff des Kronrades mit dem Gehäuse oder mit dem Steg kann vorteilhafterweise als Gabel ausgebildet sein, deren Zinken in einer auf der peripheren Oberfläche der ringförmigen Kupplung hergestellten Ringrille untergebracht sind und abwechselnd mit einer der Stirnflächen der letzteren zusammenwirken, wobei mindestens eine der Berührungsflächen der Gabel und der Kupplung auf der Seite des Kranzes des Gehäuses mit einem Reibbelag und mindestens eine der Berührungsflächen der Gabel und der Kupplung auf der Seite des Kranzes des Steges mit einem Gleitbelag versehen werden können.

Eine solche Ausführung ermöglicht es, dass beim Einschalten des Umlaufwerkes, d.h. beim Anbremsen des Kronrades, ein Teil des unmittelbar von der Gabel aufgenommenen Bremsmomentes aufgrund des erhöhten Reibfaktirs vergrössert werden kann, wodurch das Kronrad schneller gebremst wird. Im Gegenteil, bei dem Verriegeln des Umlaufwerkes, wenn das Kronrad anläuft, vermindert sich der unmittelbar von der Gabel aufgenommene Teil des Bremsmomentes aufgrund des verminderten Reibfaktors, so dass das Kronrad schneller anläuft.

Eine zweckmässige Lösung kann darin bestehen, dass das Kronrad unmittelbar an den Zähnen der dieses in Radialrichtung zentrierenden Umlaufräder angebracht und gegen Axialverschiebungen gesichert ist.

Dies hat den Vorteil der verkürzten Axialabmessungen der Transmission, denn die Notwendigkeit des Einbaus des Lagers für das Kronrad entfällt. Gleichzeitig damit wird aufgrund der vollen radialen Selbsteinstellbarkeit des Kronrades an den Zähnen der Umlaufräder das Geräusch vermindert und die Lebensdauer des Umlaufwerkes erhöht.

Die Sicherung des Kronrades in Axialrichtung erfolgt vorteilhafterweise mittels der ihm zugewandten Stirnflächen des Kranzes des Steges auf der einen Seite und des Kranzes des Gehäuses auf der anderen Seite.

Diese Lösung ermöglicht auf einfache Weise, indem die bestehenden Teile eine zusätzliche Funktion übernehmen, die Sicherung des Kronrades gegen Verschiebungen in axialer Richtung.

Zwischen den Stirnflächen des Kronrades und den ihnen zugewandten Stirnflächen der Kränze des Steges und des Gehäuseskönnen zweckmässigerweise Ringe aus einem Gleitwerkstoff eingefügt werden.

Durch Einfügen der der Abnutzung ausgesetzten austauschbaren Ringe wird die Reparaturfähigkeit der Baugruppe sichergestellt und der Bedienungsaufwand gesenkt.

Eine sinnvolle Lösung für die Transmission gemäss der Erfindung sieht vor, dass der Kranz des Steges und der Kranz des Gehäuses mit Kegelflächen ausgestattet werden und auf diesen Flächen Sperringe der Synchronisatoren mit Aussenzähnen zur Zusammenwirkung mit den Innenzähnen der ringförmigen Kupplung angebracht werden.

Das Einfügen der Synchronisatoren in die Vorrichtung zum Wechseleingriff des Kronrades mit dem Gehäuse oder mit dem Steg erleichtert den Schaltprozess praktisch ohne Vergrösserung der Ausmasse der Vorrichtung und sichert das Umlaufwerk gegen dynamische Belastungen und den vorzeitigen Verschleiss. Dabei erschneit auch die technologische Aufeinanderfolge zwischen den Teilen der Vorrichtung zum Wechseleingriff des Kronrades mit dem Gehäuse oder mit dem Steg des Umlaufwerkes und den Teilen der Schalteinrichtung in dem Hauptgetriebe.

Bei dem Vorhandensein der Sperringe des Synchronisators ist es recht zweckmässig, das Kronrad mittels der ihm zugewandten Stirnflächen dieser Sperringe in Axialrichtung zu sichern.

Bei dieser Ausführung unterliegt der Abnutzung nur ein abnehmbarer Teil, und zwar der Sperring des Synchronisators, während des Schaltprozesses sind es seine Kegelflächen, während der Arbeit des Umlaufwerkes sind es seine dem Kronrad zugewandten Stirnseiten. Der Austausch eines Teils an Stelle mehrerer setzt den Bedienungsaufwand herab.

Die gestellte Aufgabe wird auch dadurch gelöst, dass in der Transmission, die ein Achsgetriebe, ein Zweiwellen Hauptgetriebe, in dessen Gehäuse eine Kupplungswelle und eine Hauptwelle drehbar gelagert sind, und ein in Form eines Umlaufwerkes mit Eingangswelle und Ausgangswelle ausgeführtes Zusatzgetriebe in kinematischer Bindung enthält, gemäss einer weiteren Ausführungform der Erfindung das Kronrad des Umlaufwerkes auf der Hauptwelle des Hauptgetriebes starr befestigt ist und der Steg auf der mit dem Achsgetriebe verbundenen Ausgangswelle des Umlaufwerkes starr befestigt ist, wobei das Umlaufwerk eine Vorrichtung zum Wechseleingriff des Kronrades mit dem Gehäuse oder mit dem Steg besitzt.

Diese Ausführung der Transmission erweitert auch den Bereich der Übersetzungszahlen der Transmission bei gleichzeitiger Erhöhung ihres Wirkungsgrades und Verringerung der Abmessungen. Dabei bleiben im Umlaufwerk die oben beschriebenen kinematischen Bindungen und sein grundsätzlicher Aufbau, einschliesslich der Schalteinrichtung, erhalten. Kinematisch wird das Moment vom Mittenrad bis hin zum Steg reduziert in Abhängigkeit von der Lage der Schalteinrichtung, die ebenso in Form einer Vorrichtung zum Wechseleingriff des Kronrades mit dem Gehäuse oder mit dem Steg ausgebildet ist.

Zugleich erlaubt eine solche Ausführung der Transmission die Entlastung der Teile des Hauptgetriebes, denn auf seine Kupplungswelle wirkt das direkt von der Kupplung übertragene Drehmoment ein.

Es ist zweckmässig, in der Transmission die Hauptwelle des Hauptgetriebes hohl auszubilden und durch sie die Ausgangswelle des Umlaufwerkes hindurchzuführen.

Eine solche Ausführung gestattet es, die Drehsteffgkeit der Ausgangswelle zu vermindern und dadurch dynamische Belastungen in der Transmission zu senken.

Zweckmässig erscheint es gemäss der Erfindung, die Schalteinrichtung des Umlaufwerkes, die in Form der Vorrichtung zum Wechseleingriff des Krongades mit dem Gehäuse oder mit dem Steg ausgebildet ist, als eine mittels eines Antriebs axial verschiebbare ringförmige Kupplung mit Innenzähnen auszuführen, wobei das Kronrad mit Aussenzähnen zum Dauereingriff mit den Innenzähnen der ringförmigen Kupplung und der Steg und das Gehäuse mit Kränzen ebenso mit Aussenzähnen aber zum Wechseleingriff mit den Innenzähnen der ringförmigen Kupplung versehen werden können.

Eine solche Ausführung der Vorrichtung zum Wechseleingriff des Kronrades mit dem Gehäuse odermmit dem Steg vermindert die Axialabmessung der Transmission, weil die Axialabmessungen der ringförmigen Kupplung und des Kronrades auf der Breite des letzteren zusammenfallen.

Der Antrieb der Vorrichtung zum Wechseleingriff des Kronrades mit dem Gehäuse oder mit dem Steg kann vorteilhafterweise als Gabel ausgebildet werden, deren Zinken in einer auf der peripheren Oberfläche der ringförmigen Kupplung hergestellten Ringrille untergebracht sind und mit einer der Stirnflächen der letzteren abwechselnd zssammenwirken, wobei mindestens eine der Berührungsflächen der Gabel und der Kupplung auf der Seite des Kranzes des Gehäuses mit einem Reibbelag und mindestens eine der Berührungsflächen der Gabel und der Kupplung auf der Seite des Kranzes des Steges mit einem Gleitbelag versehen werden können.

Eine solche Ausführung ermöglicht, dass bei dem Einschalten des Umlaufwerkes, d.h. bei dem Anbremsen des Kronrades,ein Teil des unmittelbar von der Gabel aufzunehmenden Bremsmomentes aufgrund des erhöhten Reibfaktors vergrössert werden kann, wodurch das Kronrad schneller gebremst wird. Im Gegenteil, bei dem Verriegeln des Umlaufwerkes, wenn das Kronrad anläuft, vermindert sich der unmittelbar von der Gabel aufzunehmende Teil des Bremsmomentes aufgrund des verminderten Reibfaktors, so dass das Kronrad schneller anläuft.

Eine zweckmässige Lösung kann darin bestehen, dass das Kronrad unmittelbar an den Zähnen der dieses in Radialrichtung zentrierenden Umlaufräder angebracht und gegen Axialverschiebungen gesichert ist.

Dies hat den Vorteil der verkürzten Axialabmessungen der Transmission, denn die Notwendigkeit des Einbaus des Lagers für das Kronrad entfällt. Gleichzeitig damit wird aufgrund der vollen radialen Selbsteinstellbarkeit des Kronrades an den Zähnen der Umlaufräder das Geräusch vermindert und die Lebensdauer des Umlaufwerkes erhöht.

Die Sicherung des Kronrades ain axialer Richtung erfolgt vorteilhafterweise mittels der ihm zugewandten Stirnflächen des Kranzes des Steges auf der einen Seite und des Kranzes des Gehäuses auf der anderen Seite.

Diese Lösung ermöglicht auf einfache Weise, indem die bestehenden Teile eine zusätzliche Funktion übernehmen, die Sicherung des Kronrades gegen Verschiebung in axialer Richtung.

Zwischen den Stirnflächen des Kronrades und den ihnen zugewandten Stirnflächen der Kränze des Steges und des Gehäuses können zweckmässigerweise Ringe aus einem Gleitwerkstoff eingefügt werden.

Durch Einfügen der der Abnutzung ausgesetzten austauschbarenRinge wird die Reparaturfähigkeit der Baugruppe sichergestellt und der Bedienungsaufwand gesenkt.

Eine sinnvolle Lösung für die Transmission gemäss der Erfindung sieht vor, dass der Kranz des Steges und der Kranz des Gehäuses mit Kegelflächen ausgestattet werden und auf diesen Flächen Sperringe der Synchronisatoren mit Aussenzähnen zur Zusammenwirkung mit den Innenzähnen der ringförmigen Kupplung angebracht werden.

Das Einfügen der Synchronisatoren in die Vorrichtung zum Wechseleingriff des Kronrades mit dem Gehäuse oder mit dem Steg erleichtert den Schaltprozess praktisch ohne Vergrösserung der Ausmasse der Vorrichtung und sichert das Umlaufwerk gegen dynamische Belastungen und den vorzeitigen Verschleiss. Dabei erscheint auch die technologische Aufeinanderfolge zwischen den Teilen der Vorrichtung zum Wechseleingriff des Kronrades mit dem Gehäuse oder mit dem Steg des Umlaufwerkes und den Teilen der Schalteinrichtung in dem Hauptgetriebe.

Bei dem Vorhandensein der Sperringe des Synchronisators erscheint es zweckmässig, das Kronrad mittels der ihm zugewandten Stirnflächen dieser Sperringe in axialer Richtung zu sichern.

Bei dieser Ausführung unterliegt der Abnutzung nur ein abnehmbarer Teil, und zwar der Sperring des Synchronisators, während des Schaltprozesses sind es seine Kegelflächen, während der Arbeit des Umlaufwerkes sind es seine dem Kronrad zugewandten Stirnseiten. Der Austausch eines Teiles an Stelle mehrerer setzt den Bedienungsaufwand herab.

Die Ausführung der Transmission gemäss der Erfindung ermöglicht es, beispielsweise acht Vorwärtgänge in den Abmessungender Transmission mit einem üblichen fünfstufigen Zweiwellengetriebe zu haben, was für den Frontantriebswagen mit quer angeordnetem Motor besonders wichtig ist, sowie die Transmission bei Hauptbewegungsgeschwindigkeiten mit einem hohen Wirkungsgrad laufen zu lassen, was sich auf die Kraftstoffwirtschaftlichkeit des Automobils positiv auswirkt.

Kurze Beschreibung der Zeichnungen

.  Die Erfindung wird an Beispielen für ihre Ausführung unter Bezugnahme auf beigefügte Zeichnungen näher erläutert.
In den Zeichnungen zeigt:
Fig. 1 den prinzipiellen Getriebeplan der Transmission mit dem an der Kupplungswelle zwischen der Kupplung und dem Hauptgetriebe angebrachten Umlaufwerk, gemäss der Erfindung;
Fig. 2 den prinzipiellen Getriebeplan der Transmission mit dem an der Kupplungswelle hinter dem Hauptgetriebe angebrachten Umlaufwerk, gemäss einer Ausführungsform der Erfindung;
Fig. 3 den prinzipiellen Getriebeplan der Transmission mit einer zusätzlichen Ausgangswelle zur äusseren Leistungsentnahme, gemäss einer Ausführungsform der Erfindung;
Fig. 4 die Transmission in der Ausführung nach dem prinzipiellen Getriebeplan der Fig. 2, im Längsschnitt;
Fig. 5 die bauliche Gestaltung einer Ausführungsform der axialen Sicherung des Kronrades und des Antriebs der Vorrichtung zum Wechseleingriff des Kronrades mit dem Gehäuse oder mit dem Steg, gemäss der Erfindung, im Längsschnitt;
Fig. 6 die bauliche Gestaltung einer weiteren Ausführungsform der axialen Sicherung des Kronrades, gemäss der Erfindung;
Fig. 7 den prinzipiellen Getriebeplan der Transmission mit dem an der Hauptwelle des Hauptgetriebes angebrachten Umlaufwerk, gemäss einer Ausführungsform der Erfindung;
Fig. 8 den prinzipiellen Getriebeplan der Transmission mit einer Anordnungsvariante des Umlaufwerkes an der Hauptwelle des Hauptgetriebes, gemäss der Erfindung.

Beste Ausführungsformen der Erfindung

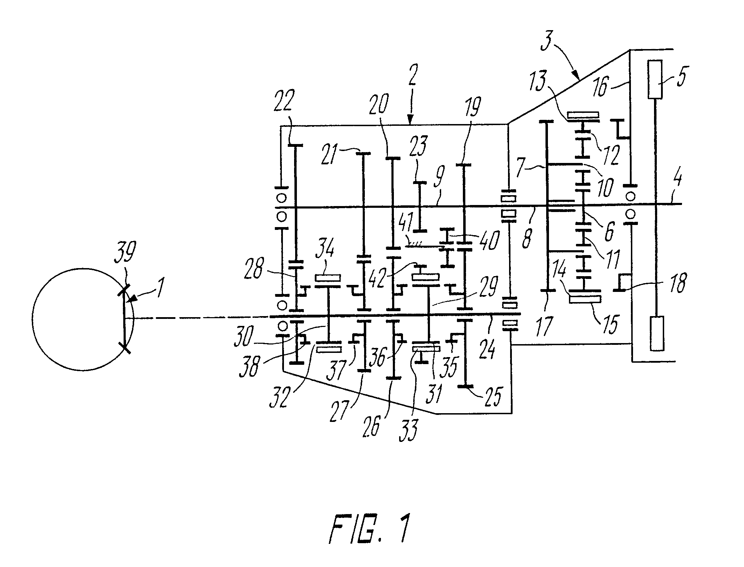

Die Transmission eines Fahrzeuges enthält kinematisch verbundene: ein Achsgetriebe 1 (Fig. 1), ein Zweiwellen-Hauptgetriebe 2 und ein in Form eines Umlaufwerkes 3 ausgebildetes Zusatzgetriebe.

Die Eingangswelle 4 des Umlaufwerkes 3 ist an dem einen Ende mit dem getriebenen Kupplungselement 5 und an dem anderen Ende mit dem Mittenrad 6 verbunden,

Der Steg 7 des Umlaufwerkes 3 sitzt auf der Ausgangswelle 8 und ist mit der Kupplungswelle 9 des Hauptgetriebes 2 fest verbunden. Auf den Achsen 10 des Steges 7 sind Umlaufräder 11 drehbar angebracht, die mit dem Kronrad 12 zusammenwirken. Das Kronrad 12 ist an den Zähnen der Umlaufräder 11 frei angeordnet und weist Aussenzähne 13 zum Dauereingriff mit den Innenzähnen 14 der ringförmigen Schaltkupplung 15 einer Vorrichtung zum Wechseleingriff des Kronrades 12 mit dem Gehäuse 16 oder mit dem Steg 7 auf.

Die Schaltkupplung 15 kann entweder mit dem Kranz 17 des Steges 7 in Eingriff kommen oder mit dem Kranz 18, der am Gehäuse 16 des Hauptgetriebes 2 oder an anderen, mit dem erwähnten Gehäuse 16 fest verbundenen Körperteilen starr befestigt ist.

Die Kupplungswelle 9 des Hauptgetriebes 2 weist befestigte oder in eins ausgebildete Treibräder 19, 20, 21, 22 und 23 auf.

Parallel zur Kupplungswelle 9 ist im Gehäuse 16 die Hauptwelle 24 des Hauptgetriebes 2 drehbar angeordnet, die drehbare frei sitzende getriebene Räder 25, 26, 27 und 28 und starr befestigte Naben 29 und 30 mit Kränzen 31 und 32 jeweils zur Anbringung der Schaltkupplungen 33 und 34 des Hauptgetriebes 2 trägt.

Die getriebenen Räder 25, 26, 27 und 28 haben jeweils Kränze 35, 36, 37 und 38, die paarweise den Kränzen 31 und 32 der Naben 29 und 30 ihrer jeweiligen Schaltkupplungen 33 und 34 entsprechen.

Die Hauptwelle 24 des Hauptgetriebes 2 ist mit dem Treibrad 39 des Achsgetriebes 1 verbunden, das insbesondere als Ganzes ausgebildet ist, wobei das Treibrad 39 des Achsgetriebes I sowohl zylindrisch als auch andersartig sein kann.

Zum Einschalten der Rückwärtsgänge ist ein Zwischenrad 40 vorgesehen, das auf der Achse 41 axial verschiebbar angebracht ist, während die Schaltkupplung 33 mit Aussenzähnen 42 versehen und ein getriebenes Rad des Rückwärtsganges ist.

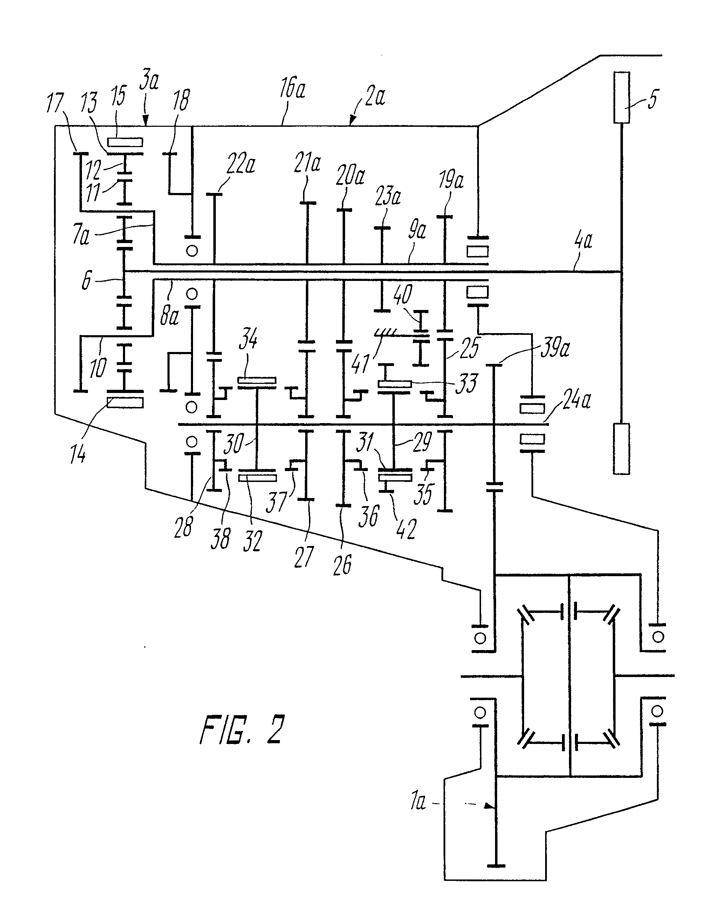

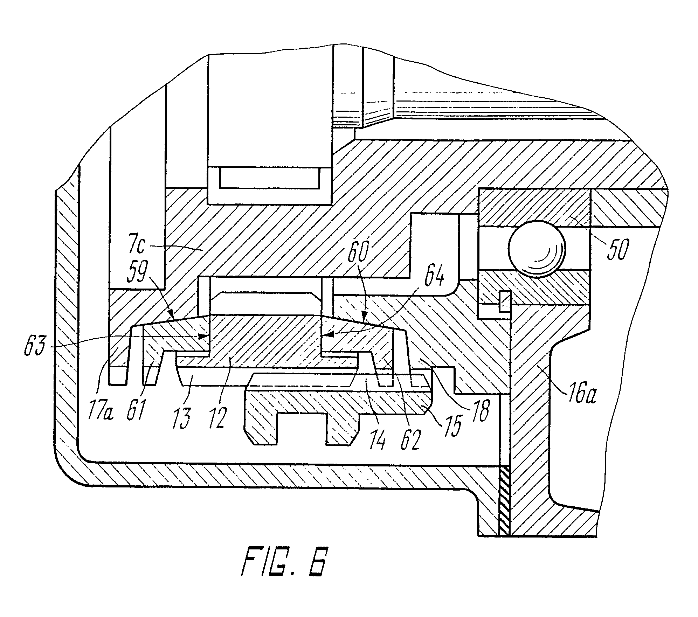

Gemäss der in Fig. 2 und 4 dargestellten Ausführungsform der Transmission ist die Kupplungswelle 9a des Hauptgetriebes 2a hohl ausgebildet, und durch sie geht die Eingangswelle 4a des Umlaufwerkes 3a hindurch. Der Steg 7a befindet sich dabei am Ende der Kupplungswelle 9a auf der zur Kupplung entgegengesetzten Seite.

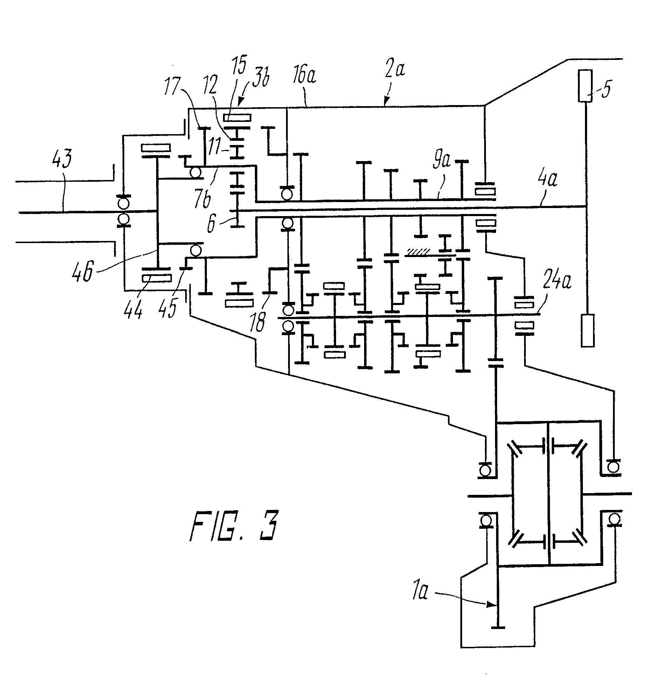

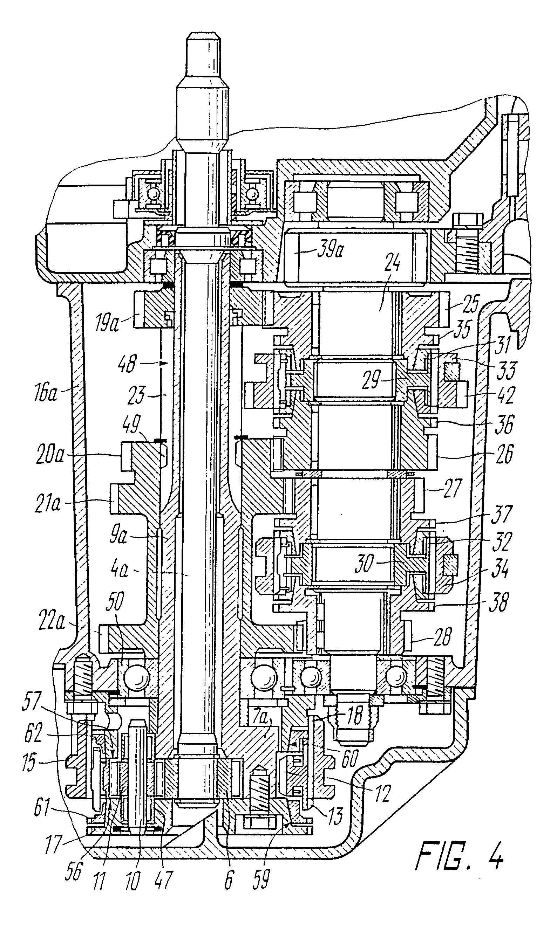

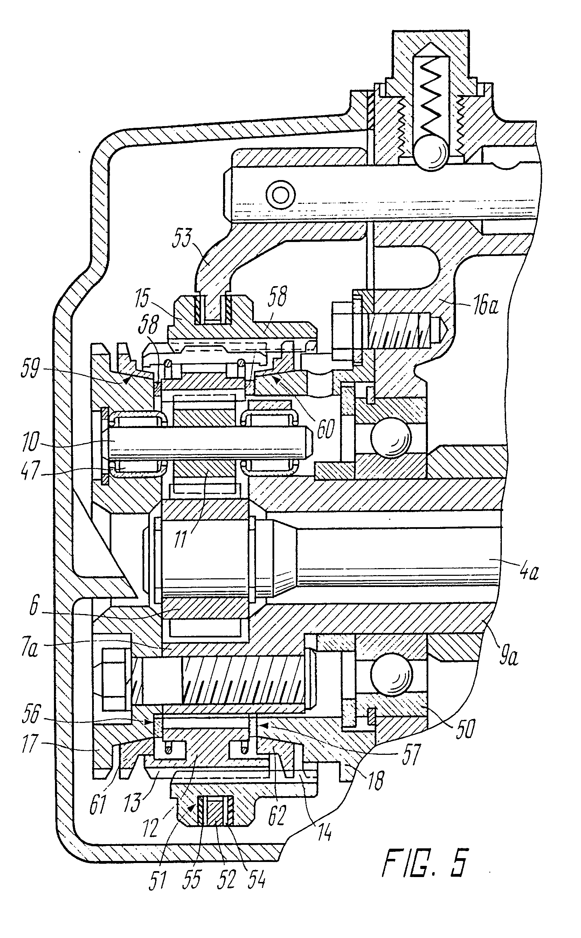

Die zusätzliche Ausgangswelle 43 (Fig. 3) zur äusseren Leistungsentnahme wird mit dem Steg 7b des Umlaufwerkes 3b durch eine Einrückkupplung 44 verbunden, die den zusätzlichen gezahnten Kranz 45 am Steg 7b mit dem gezahnten Kranz 46 an der Ausgangswelle 43 verbindet.

Der Steg 7a des Umlaufwerkes 3a weist, wie aus den Fig. 4 und 5 hervorgeht, die Form eines mit der Kupplungswelle 9a in eins ausgebildeten Flansches auf, in dem die Achsen 10 der Umlaufräder 11, beispielsweise mittels Nadellagern 47, angebracht sind.

Die Kupplungswelle 9a ist hohl ausgebildet und hat zwei Abschnitte, und zwar einen mit dem darauf sitzenden Block aus drei Treibrädern 20a, 21a und 22a und den anderen mit Längszähnen 48 zum Eingriff mit dem Zwischenrad 40 des Rückwärtsganges (in der Zeichnung nicht gezeigt) und zur Verbindung mit dem erwähnten Räderblock mit Hilfe der am Block vorgesehenen Innenzähnen 49. Das Treibrad 19a ist ebenso starr mit der Kupplungswelle 9a in bekannter Weise verbunden, beispielsweise mit Hilfe derselben Zähne 48. Der maximale Aussendurchmesser der beiden Abschnitte ist kleiner als der Innendurchmesser des am Flansch des Steges 7a angeordneten Lagers 50, und der Übergang vom Durchmesser des ersten Abschnittes zum Durchmesser des zweiten geschieht ohne jegliche "Stufen".

In Fig. 5 ist ersichtlich, dass die ringförmige Schaltkupplung 15 eine äussere Ringrille 51 aufweist, in die die Zinken 52 der Gabel 53 des Antriebs zum Wechseleingriff des Kronrades 12 mit dem Gehäuse 16a oder mit dem Steg 7a hineinragen. Die Stirnseiten der Gabeln besitzen einen Reibbelag 54 und einen Gleitbelag 55.

Das Kronrad 12 ist unmittelbar an den Zähnen der Umlaufräder 11 angebracht, die es in radialer Richtung zentrieren (Fig. 4, 5). Die axiale Sicherung des Kronrades 12 erfolgt. mit den ihm zugewandten Stirnflächen 56 und 57 des Kranzes 17 des Steges 7a bzw. des Kranzes 18 des Gehäuses 16a (Fig. 4).

In einer anderen Ausführungsform der Erfindung (Fig. 5) sind zwischen den erwähnten Stirnflächen 56, 57 und den Stirnseiten des Kronrades 12 Ringe 58 aus einem Gleitwerkstoff eingefügt.

In der Ausführungsform der Vorrichtung zum Wechseleingriff des Kronrades 12 mit dem Gehäuse 16a oder mit dem Steg 7a 7c sind der Kranz 17 des Steges 7a, 7c und der Kranz 18 des Gehäuses 16a mit jeweiligen Kegelflächen 59 und 60 versehen, auf denen Sperringe 61 und 62 (Fig. 4, 5, 6) angebracht sind.

In der Ausführungsform, die in Fig. 6 dargestellt ist, sind die Sperringe 61 und 62 des Synchronisators mit Stirnflächen 63 und 64 versehen, die mit den Stirnseiten des Kronrades 12 in Berührung stehen. Der Kranz 17a und der Steg 7c sind einstückig dargestellt.

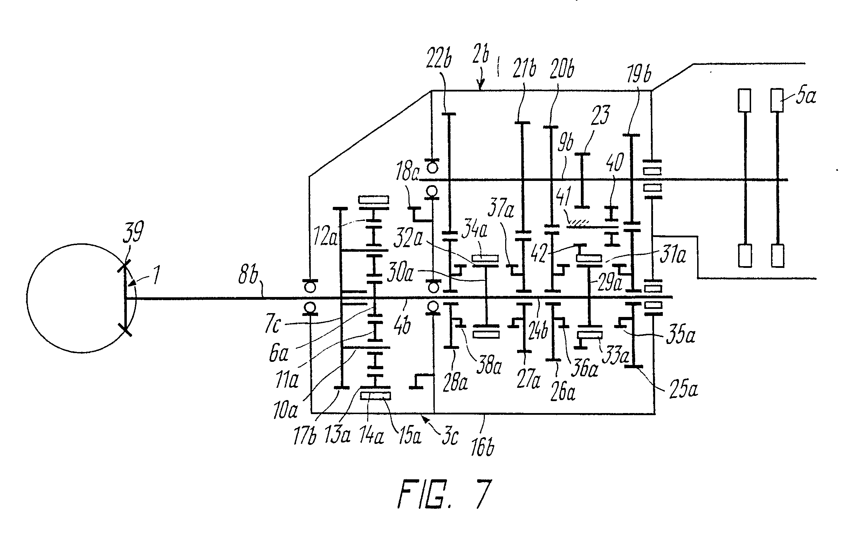

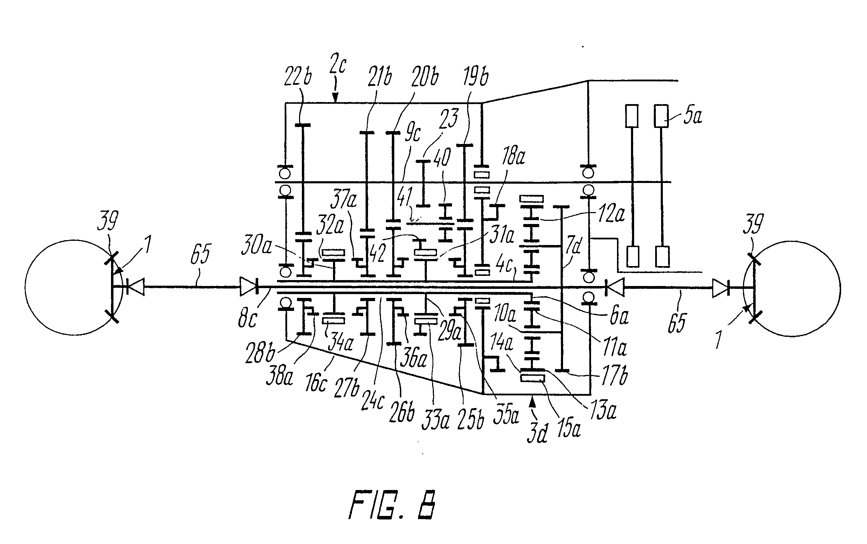

Die Transmission gemäss gemäss der Erfindung mit der Anordnungsvariante des Umlaufwerkes 3d, 3c an der Hauptwelle 24b, 24c des Hauptgetriebes 2b, 2c wird in Fig. 7 und 8 dargestellt. Das Mittenrad 6a ist auf der Eingangswelle 4b, 4c starr befestigt, die unmittelbar mit der Hauptwelle 24b, 24c verbunden ist, und der Steg 7c, 7d ist auf der Ausgangswelle 8b, 8c des Umlaufwerkes 3c, 3d starr befestigt, die unmittelbar oder über die Kardanwelle 65 mit dem Achsgetriebe 1 verbunden ist.

Der Aufbau der Vorrichtung zum Wechseleingriff des Kronrades 12a mit dem Gehäuse 16b, 16c oder mit dem Steg 7c, 7d, sowie der Aufbau ihres Antriebes und der Elemente der radialen und axialen Sicherung des Kronrades 12a sind analog den oben beschriebenen.

Die Transmission arbeitet wie folgt.

Die Schaltkupplung 15, die zwei Stellungen einnehmen kann und die Zähne 13 des Kronrades 12 mit dem Kranz 18 des Gehäuses 16 oder mit dem Kranz 17 des Steges 7 verbindet, verschiebt sich im Anfang der Bewegung nach rechts, um das Kronrad 12 gegen Drehung zu sperren. (Hier und weiterhin wird die Verschiebungsrichtung bezüglich der Zeichhung gemeint). Dabei wird das Drehmoment von der Kraftanlage über das getriebene Elemente 5 der Kupplung und die Eingangswelle 4 des Umlaufwerkes 3 auf das auf der Eingangswelle 4 befestigte Mittenrad 6 übertragen.

Das Mittenrad 6 dreht die damit kämmenden Umlaufräder 11, und da das Kronrad 12 unbeweglich ist, so wälzen sich die Umlaufräder 11, in dem sie sich auf den Achsen 10 des Steges 7 drehen, um das Mittenrad 6, wobei sie den Steg 7 und damit auch die Kupplungswelle 9 des Hauptgetriebes 2 nach derselben Seite mitnehmen, jedoch unter Verlangsamung der Drehzahl (Umlaufwerkeffekt).

Zusammen mit der Kupplungswelle 9 drehen sich die Treibräder 19, 20, 21 und 22 und die mit ihnen kämmenden, auf der Hauptwelle 24 freisitzenden getriebenen Räder 25, 26, 27 und 28. Das Drehmoment wird in dieser Stellung nicht übertragen.

Das Einschalten des ersten Ganges der Transmission geschieht durch Verschieben der Schaltkupplung 33 nach rechts, dabei verbindet die Kupplung 33 den Kranz 35 des getriebenen Rades 25 mit dem Kranz 31 der auf der Hauptwelle 24 befestigten Nabe 29. Auf diese Weise werden die Drehung und das Drehmoment auf die Hauptwelle 24 und von dieser auf das Treibrad 39 des Achsgetriebes 1 unmittelbar oder über eine Zwischeneinrichtung, z.B. die Kardanwelle 65, und weiterhin auf die Fahrzeugtreibräder übertragen.

Ähnlich wird durch die Verschiebung der Kupplung 33 nach links und Verbindung der Kränze 36 und 31 der zweite Gang eingeschaltet.

Der dritte Gang wird durch die Verschiebung der Schaltkupplung 34 nach rechts und Verbindung des Kranzes 32 der Nabe 30 mit dem Kranz 37 des getriebenen Zahnrades 27 und der vierte Gang durch die Verschiebung der Kupplung 34 nach links und Verbindung der Kränze 32 und 38 eingeschaltet.

Weiterhin verschiebt sich die Schaltkupplung 15 des Umlaufwerkes 3 nach dem Anlauf nach links, wobei sie die Zähne 13 des Kronrades 12 mit dem Kranz 17 des Steges 7 verbindet und die gemeinsame Drehung des Steges 7 und des Kronrades 12 unmöglich macht. Das Umlaufwerk wird dabei gegen die gemeinsame Drehung aller seiner Glieder gesichert, während die Ausgangswelle 4, das Umlaufwerk 3, die Kupplungswelle 9 sich wie ein Ganzes drehen.

Das Einschalten des fünften Ganges erfolgt bei der Verschiebung der Schaltkupplung 33 nach rechts ähnlich wie beim ersten Gang, während das Einschalten des sechsten Ganges durch die Verschiebung der Schaltkupplung 33 nach links geschieht. Der siebente und der achte Gang wird jeweils durch die Verschiebung der Kupplung 34 nach rechts und nach links eingeschaltet.

Die Rückwärtsgänge werden gebildet, indem das Zwischenrad 40 mit dem Treibrad 23 und dem getriebenen Rad 42 auf bekannte Weise in Eingriff gebracht wird. Dabei wird ein Rückwärtsgang durch die Verbindung der Zähne 13 des Kronrades 12 mit dem Kranz 18 des Gehäuses 16 mittels der Schaltkupplung 15 und der andere durch die Verbindung der Zähne 13 mit dem Kranz 17 des Steges 7 sichergestellt.

In den Ausführungsformen der Transmission mit der Anordnung des Umlaufwerkes 3c an der Hauptwelle 24b des Hauptgetriebes 2b (Fig. 7) ist ihre Arbeitsweise ähnlich der obenbeschriebenen Transmission.

Die Schaltkupplung 15a des Umlaufwerkes 3c befindet sich zu Beginn der Bewegung in der rechten Stellung und sperrt die Drehung des Kronrades 12a, wobei sie die Zähne 13a des Kronrades 12a mit dem Kranz 18a des Gehäuses 16b verbindet. Die Drehung wird dabei von der Kraftanlage über das getriebene Element der Kupplung 5a auf die Kupplungswelle 9b und die Treibräder 19b, 20b, 21b und 22b des Hauptgetriebes 2b übertragen. Zusammen mit ihnen drehen sich die mit ihnen kämmenden, frei an der Hauptwelle 24b sitzenden getriebenen Räder 25a, 26a, 27a und 28a. Das Drehmoment wird in dieser Stellung nicht übertragen.

Zum Einschalten des ersten Ganges wird die Schaltkupplung 33a nach rechts verschoben, und der Kranz 35a des getriebenen Zahnrades 25a wird mit dem Kranz 31a der Habe 29a, die an der Hauptwelle 24b befestigt ist, verbunden. In dieser Stellung wird das Drehmoment auf die Hauptwelle 24b, das darauf starr befestigte Mittenrad 6a und die mit diesem in Eingriff stehenden Umlaufräder 11a übertragen. Da das Kronrad 12a unbeweglich ist, wälzen sich die Umlaufräder 11a um dieses und nehmen den Steg 7c und samt diesem auch die Ausgangswelle 8b und das mit ihr verbundene Treibrad 39 des Achsgetriebes 1. und ferner die Fahrzeugtreibräder mit.

Durch die Verschiebung der Kupplung 33a nach links und die Verbindung der Kränze 36a und 31a wird der zweite Gang eingeschaltet.

Der dritte Gang wird durch die Verschiebung der Schaltkupplung, 31 nach rechts und die Verbindung des Kranzes 32a der Nabe 30a mit dem Kranz 37a des getriebenen Zahnrades 27a eingeschaltet, während der vierte Gang durch die Verschiebung der Kupplung 34a nach links und die Verbindung der Kränze 32a und 38a eingeschaltet wird.

Ähnlich dem Obenbeschriebenen werden die nachfolgenden Gänge höherer Stufen eingeschaltet. Die Schaltkupplung 15a des Umlaufwerkes 3c wird nach links verstellt und sie verbindet dabei die Zähne 13a des Kronrades 12a mit dem Kranz 17b des Steges 7c. Das Umlaufwerk 3c wird verriegelt.

Man schaltet den fünften Gang ein durch die Verschiebung der Schaltkupplung 33a nach rechts ähnlich wie beim ersten Gang, und den sechsten Gang durch die Verschiebung der Schaltkupplung 33a nach links. Der siebente und der achte Gang wird ähnlich dem dritten und dem vierten eingeschaltet, indem man die Schaltkupplung 34a jeweils nach rechts und nach links verschiebt. Der Antrieb der Achsen erfolgt über die Ausgangswelle 8b, die mit dem Steg 7c verbunden ist, der das Drehmoment auf die Treibräder 39 der Achsgetriebe 1 der Achsen unmittelbar oder über die Kardanwellen 65 und ferner auf die Fahrzeugtreibräder überträgt.

Bei Vorhandensein des Synchronisators (Fig. 5) in der Vorrichtung zum Wechseleingriff des Kronrades 12 und der Beläge 54, 55 an den mit den Oberflächen der Ringrille 51 der ringförmigen Kupplung 15 in Berührung stehenden Zinken 52 der Gabel 53 des Antriebs wird der Unterschied in der Arbeit nur darin bestehen, was die betreffenden Vorrichtungen in die Konstruktion mit einbringen, und zwar: bei der Verschiebung der Schaltkupplung 15 durch die Gabel 53 nach rechts nimmt die Schaltkupplung 15 das Kronrad 12 und den Sperring 62 mit und drückt diesen an den Kegel 60 an. Die Schaltkupplung 15 und der Sperring 62 werden gesperrt und der Prozess der Umdrehungszahlverminderung des Kronrades 12 (Bremsen) beginnt. Dieser Prozess wird durch die Reibung begünstigt, die zwischen dem Reibbelag 54 der unbeweglichen Zinken 52 der Gabel 53 des Antriebs und der Stirnseite der Ringrille 51 der ringförmigen Kupplung 15 entsteht.

Beim Umschalten auf höhere Gangstufen wird die Schaltkupplung 15 durch die Gabel 53 nach links verschoben, wobei sie mit dem Sperring 61 blockiert wird und das Kronrad 12 beschleunigt wird. Der Gleitbelag 55 der Zinken 52 der unbeweglichen Gabel 53 trägt dabei in grösserem Masse zum Synchronisierungsprozess bei.

Je nachdem wie die Begrenzung der Axialverschiebung des Kronrades 12 konstruktiv ausgeführt ist, kann dieses entweder mit der Stirnfläche 56 des Kranzes 17 des Steges 7a und mit der Stirnfläche 57 des Kranzes 18 des Gehäuses 16a (Fig. 5) oder mit den Anschlagringen 58 oder mit den Stirnflächen 63 und 64 der Sperringe 61 und 62 (Fig. 6) des Synchronisators in Berührung kommen.

Um die zusätzliche Ausgangswelle 43 zur äusseren Leistungsentnahme einzuschalten, verschiebt man die Einrückkupplung 44 (Fig. 3) nach rechts, bis die Zähne der Kränze 45 und 46 am Steg 7b bzw. an der Ausgangswelle 43 verbunden sind.

Ferner, je nach der erforderlichen Drehgeschwindigkeit der zusätzlichen Ausgangswelle 43 zur äusseren Leistungsentnahme wird die Schaltkupplung 15 mit dem Kranz 18 des Gehäuses 16a oder mit dem Kranz 17 des Steges 7b verbunden. In Abhängigkeit von der Stellung der Schaltkupplung 15 dreht sich die zusätzliche Ausgangswelle 43 mit der Umdrehungszahl des Motors, wenn die Schaltkupplung 15 mit dem Kranz 17 des Steges 7b verbunden ist, oder mit der Verlangsamung der Drehzahl gemäss der Ubersetzungszahl des Umlaufwerkes 3b, wenn sie mit dem Kranz 18 des Gehäuses 16a verbunden ist.

Dabei wird das Drehmoment von der Kraftanlage über das getriebenes Element der Kupplung 5 und die Eingangswelle 4a des Umlaufwerkes 3b auf das auf der Eingangswelle 4a befestigte Mittenrad 6 übertragen. Das Mittenrad 6 versetzt über die Umlaufräder 11 den Steg 7b in Drehung, der über den Zahnkranz 45, die Kupplung 44 und den Zahnkranz 46 das Drehmoment auf die Ausgangswelle 43 zur äusseren Leistungsentnahme überträgt. Das Einschalten der zusätzlichen Ausgangswelle 43 zur äusseren Leistungsentnahme kann sowohl während des Fahrens als auch während des Haltens des Fahrzeuges erfolgen. Besonders anziehend ist der Antrieb der zusätzlichen Ausgangswelle bei der Längsanordnung des Motors.

Gewerbliche Anwendbarkeit

Mit dem grössten Nutzeffekt kann die erfindungsgemäss vorgeschlagene Transmission in Fahrzeugen, insbesondere in Automobilen mit vergrösserter Gangzahl und erweitertem Bereich der Übersetzungszahlen verwendet werden.

Mit dem grössten Nutzeffekt kann die erfindungsgemäss vorgeschlagene Transmission in Fahrzeugen, insbesondere in Automobilen mit vergrösserter Gangzahl und erweitertem Bereich der Übersetzungszahlen verwendet werden.

**Patentansprüche**

1. Stufen- bzw. Schaltgetriebe für Fahrzeuge mit einem Achsgetriebe (1), einem Zweiwellen-Hauptgetriebe (2), in dessen Gehäuse (16) eine Kupplungswelle (9) und eine Hauptwelle (24) drehbar gelagert sind, und mit einem in Form eines Umlaufwerkes (Planetengetriebe) (3) mit Eingangswelle (4) und Ausgangswelle (8) ausgeführten Zusatzgetriebe in kinematischer Bindung, dadurch gekennzeichnet, daß im Umlaufwerk (3) das Zentralrad (6) auf der mit der Kupplung (5) verbundenen Eingangswelle (4) starr befestigt ist und der Steg (7) auf der Kupplungswelle (9) des Hauptgetriebes (2) starr befestigt ist, wobei das Umlaufwerk (3) eine Vorrichtung zum Wechseleingriff des Kronrades (12) mit dem Gehäuse (16) oder mit dem Steg (7) besitzt.

2. Getriebe nach Anspruch 1, dadurch gekennzeichnet, daß der Steg (7) am Ende der Kupplungswelle (9) des Hauptgetriebes (2) auf der Seite der Kupplung (5) starr befestigt ist.

3. Getriebe nach Anspruch 1, dadurch gekennzeichnet, daß die Kupplungswelle (9a) des Hauptgetriebes (2a) hohl ausgebildet ist und die Eingangswelle (4a) des Umlaufwerkes (3a) durch sie hindurchgeht, wobei der Steg (7a) am Ende der Kupplungswelle (9a) auf der zur Kupplung (5) entgegengesetzten Seite angebracht ist.

4. Getriebe nach Anspruch 3, dadurch gekennzeichnet, daß das Umlaufwerk (3b) eine mittels einer Einrückkupplung (44) mit dem Steg (7b) verbundene zusätzliche Ausgangswelle (13) zur äußeren Leistungsentnahme aufweist.

5. Getriebe nach Anspruch 3, dadurch gekennzeichnet,
daß der Steg (7a) die Form eines mit der Kupplungswelle (9a) einstückig ausgebildeten Flansches aufweist, an dem die Achsen (10) der Umlaufräder (11) angebracht sind.

6. Getriebe nach Anspruch 5, dadurch gekennzeichnet, dass der sich von dem auf der Kupplungswelle (9a) flanschseitig sitzenden Lager (50) in Richtung auf die Kupplung (5) erstreckende Teil der Kupplungswelle (9a) einen maximalen Aussendurchmesser hat, der kleiner als der Innendurchmesser des erwähnten Lagers (50) ist, wobei der erwähnte Teil der Kupplungswelle (9a) einen Abschnitt aufweist, auf dem Längszähne (48) zum Eingriff mit dem Zwischenrad (40) des Rückwärtsganges und zur Verbindung mit den auf der Kupplungswelle (9a) angebrachten, mit Innenzähnen (49) versehenen Rädern (20a, 21a, 22a) ausgeführt sind.

7. Getriebe nach Anspruch 1, dadurch gekennzeichnet, dass die Vorrichtung zum Wechseleingriff des Kronrades (12) mit dem Gehäuse (16, 16a) oder mit dem Steg (7, 7a, 7b) in Form einer mittels eines Antriebs axial verschiebbaren ringförmigen Kupplung (15) mit Innenzähnen (14) ausgebildet ist, wobei das Kronrad (12) Aussenzähne (13) zum Dauereingriff mit den Innenzähnen (14) der ringförmigen Kupplung (15) besitzt und der Steg (7, 7a, 7b) und das Gehäuse (16, 16a) jeweils mit einem Kranz (17, 17a bzw,18) mit Aussenzähnen zum Wechseleingriff mit den Innenzähnen (14) der ringförmigen Kupplung (15) versehen sind:

8. Getriebe nach Anspruch 7, dadurch gekennzeichnet, dass der Antrieb eine Gabel (53) enthält, deren Zinken (52) in einer auf der peripheren Oberfläche der ringförmigen Kupplung ( 15 ) hergestellten Ringrille (51) untergebracht sind und mit einer der Stirnflächen der letzteren abwechselnd zusammenwirken, wobei mindestens eine der Berührungsflächen der Gabel (53) und der Kupplung (15) auf der Seite des Kranzes (18) des Gehäuses (16, 16a) einen Reibbelag (54) aufweist und mindestens eine der Berührungsflächen (53) der Gabel (53) und der Kupplung (15) auf der Seite des Kranzes (17) des Steges (7, 7a, 7b) einen Gleitbelag (55) aufweist.

9. Getriebe nach Anspruch 7, dadurch gekennzeichnet, dass das Kronrad (12) unmittelbar an den Zähnen der es in Radialrichtung zentrierenden Umlaufräder (11) angebracht und in Axialrichtung gesichert ist.

10. Getriebe nach Anspruch 9, dadurch gekennzeichnet, dass das Kronrad (12) mittels der ihm zugewandten Stirnflächen (56 und 57) des Kranzes (17) des Steges (7) auf der einen Seite bzw. des Kranzes (18) des Gehäuses (16, 16a) auf der anderen Seite in Axialrichtung gesichert ist.

11. Getriebe nach Anspruch 10, dadurch gekennzeichnet, dass zwischen den Stirnflächen des Kronrades (12) und den ihnen zugewandten Stirnflächen (56, 57) der Kränze (17 und 18) des Steges (7, 7a, 7b) bzw. des Gehäuses (16, 16a) Ringe (58) aus einem Gleitwerkstoff vorgesehen sind.

12. Getriebe nach Anspruch 10, dadurch gekennzeichnet, dass der Kranz (17, 17a)des Steges (7.7a.7b) und der Kranz (18) des Gehäuses (16, 16a) mit Kegelflächen (59 bzw. 60) versehen sind, auf denen Sperringen (61 bzw. 62) der Synchronisatoren mit Aussenzähnen zur Zusammenwirkung mit den Innenzähnen (14) der ringförmigen Kupplung (15) angebracht sind.

13. Getriebe nach Anspruch 12, dadurch gekennzeichnet, dass das Kronrad (12) mittels der ihm Zugewandten Stirnflächen (63, 64) der Sperringe (61 bzw. 62) der Synchronisatoren in Axialrichtung gesichert ist.

14. Getriebe eines Fahrzeuges, die ein Achsgetriebe (1), ein Zweiwellen-Hauptgetriebe (2b, 2c), in dessen Gehäu-se (16b, 16c) eine Kupplungswelle (9b, 9c) und eine Hauptwelle (24b, 24c) drehbar gelagert sind, und ein in Form eines Umlaufwerkes (3c, 3d) mit Eingangswelle (4b, 4c) und Ausgangswelle (8b, 8c) ausgeführtes Zusatzgetriebe in kinematischer Bindung enthält, dadurch **gekennzeichnet,** dass im Umlaufwerk (3c, 3d) das Mittenrad (6a) auf der Hauptwelle (24b, 24c) des Hauptgetriebes (2b, 2c) starr befestigt ist und der Steg (7c, 7d) auf der mit dem Achsgetriebe (1) verbundenen Ausgangswelle (8b, 8c) des Umlaufwerkes (3c, 3d) starr befestigt ist, wobei das Umlaufwerk (3c, 3d) eine Vorrichtung zum Wechseleingriff des Kronrades (12a) mit dem Gehäuse (16b, 16c) oder mit dem Steg (7c, 7d) besitzt.

15. Getriebe nach Anspruch 14, dadurch **gekennzeichnet,** dass die Hauptwelle (24c) des Hauptgetriebes (2c) hohl ausgebildet ist und die Ausgangswelle (8c) des Umlaufwerkes (3d) durch sie hindurchgeht.

16. Getriebe nach Anspruch 14, dadurch **gekennzeichnet,** dass die Vorrichtung zum Wechseleingriff des Kronrades (12a) mit dem Gehäuse (16b, 16c) oder mit dem Steg (7c, 7d) in Form einer mittels eines Antriebs axial verschiebbaren ringförmigen Kupplung (15a) mit Innenzähnen (14a) ausgebildet ist, wobei das Kronrad (12a) Aussenzähne (13a) zum Dauereingriff mit den Innenzähnen (14a) der ringförmigen Kupplung (15a) aufweist und der Steg (7c, 7d) und das Gehäuse (16b, 16c) mit Kränzen (17b bzw. 18a) mit Aussenzähnen zum Wechseleingriff mit den Innenzähnen (14a) der ringförmigen Kupplung (15a) versehen sind.

17. Getriebe nach Anspruch 16, dadurch **gekennzeichnet,** dass der Antrieb eine Gabel (53) enthält, deren Zinken (52) in einer auf der peripheren Oberfläche der ringförmigen Kupplung (15a) hergestellten Ringrille (51) untergebracht sind und mit einer der Stirnflächen der letzteren abwechselnd zusammenwirken, wobei mindestens eine der Berührungsflächen der Gabel (53) und der Kupplung (15a) auf der Seite des Kranzes des Gehäuses (16b, 16c) einen Reibbelag (54) aufweist und mindestens eine der Berührungsflächen der Gabel (53) und der Kupplung (15a) auf der Seite des Kranzes (17b) des Steges (7c, 7d) einen Gleitbelag (55) aufweist.

18. Getriebe nach Anspruch 16, dadurch **gekennzeichnet,** dass das Kronrad (12a) unmittelbar an den Zähnen der es in Radialrichtung zentrierenden Umlaufräder (11a) angebracht und in Axialrichtung gesichert ist.

19. Getriebe nach Anspruch 18, dadurch **gekennzeichnet,** dass das Kronrad (12a) mittels der ihm zugewandten Stirnflächen (56, 57) des Kranzes des Steges (7c, 7d) auf der einen Seite bzw. des Kranzes des Gehäuses (16b, 16c) auf der anderen Seite in axialer Richtung gesichert ist.

20. Getriebe nach Anspruch 19, dadurch **gekennzeichnet,** dass zwischen den Stirnflächen des Kronrades (12a) und den ihnen zugewandten Stirnflächen (56, 57) der Kränze ( 17b ) des Steges (7c, 7d) bzw. des Gehäuses (16b, 16c) Ringe (58) aus einem Gleitwerkstoff vorgesehen sind.

21. Getriebe nach Anspruch 16, dadurch **gekennzeichnet,** dass der Kranz (17b) des Steges (7c, 7d) und der Kranz (18a) des Gehäuses (16b, 16c) mit Kegelflächen (59 bzw. 60) versehen sind, auf denen Sperringe (61 bzw. 62) der Synchronisatoren mit Aussenzähnen zur Zusammenwirkung mit den Innenzähnen (14a) der ringförmigen Kupplung (15a) angebracht sind.

22. Getriebe nach Anspruch 21, dadurch **gekennzeichnet,** dass das Kronrad (12a) mittels der ihm Zugewandten Stirnflächen (63, 64) der Sperringe (61 bzw. 62) der Synchronisatoren in axialer Richtung gesichert ist.

FIG. 1

FIG. 2

FIG. 3

FIG. 4

FIG. 5

FIG. 6

FIG. 7

EP 0 437 663 A1

FIG. 8

Europäisches
Patentamt

**EUROPÄISCHER RECHERCHENBERICHT**

Nummer der Anmeldung

EP    90 10 1088

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-0132023 (EATON CORPORATION) <br> * Figur 1 * | 1, 3, 5, <br> 14, 15 | F16H37/04 <br> F16H3/54 |
| A | | 7, 8, <br> 12, 16, <br> 17, 21 | |
| | --- | | |
| Y | EP-A-0028579 (TOYOTA) <br> * Zusammenfassung; Figur 1 * | 1, 3, 5, <br> 14, 15 | |
| | --- | | |
| A | DE-A-2059351 (PRAGA-AUTOMOBILOVE ZAAVODY) <br> * das ganze Dokument * | 1, 5, 7, <br> 14, 16 | |
| | ----- | | |

**RECHERCHIERTE SACHGEBIETE (Int. Cl.5 )**

F16H
B60K

Der vorliegende Recherchenbericht wurde für alle Patentansprüche erstellt

| Recherchenort | Abschlußdatum der Recherche | Prüfer |
|---|---|---|
| BERLIN | 04 SEPTEMBER 1990 | GERTIG I. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................................
& : Mitglied der gleichen Patentfamilie, übereinstimmendes
    Dokument

EPO FORM 1503 03.82 (P0403)